# EUROPÄISCHE PATENTANMELDUNG

(11) **EP 1 762 819 A1**
(43) Veröffentlichungstag der Anmeldung: **14.03.2007**
(21) Anmeldenummer: 06002273.8
(22) Anmeldetag: 03.02.2006
(51) Int. Cl.: G01B 5/04, B23K 9/12

(54) **Drahtvorschubmessgerät**

(30) Priorität: 12.09.2005 DE 102005043583
(71) Anmelder: Linde Aktiengesellschaft, 65189 Wiesbaden (DE)
(72) Erfinder: Tenbrink, Klaus, 85354 Freising (DE)
(74) Vertreter: Kasseckert, Rainer

(57) **Zusammenfassung**

Die Erfindung betrifft eine Messvorrichtung für den Drahtvorschub beim MIG- oder MAG-Schweißen mit einem Messkopf (2), der die Länge des vorgeschobenen Drahtes erfasst, und einem Anzeigegerät. Neu ist eine drahtlose Verbindung zwischen Messkopf (2) und Anzeigegerät.

## Beschreibung

Die Erfindung betrifft eine Messvorrichtung für den Drahtvorschub beim MIG- oder MAG-Schweißen mit einem Messkopf, der die Länge des vorgeschobenen Drahtes erfasst, und einem Anzeigegerät.

Eine solche Vorrichtung ist zum Beispiel aus der JP 632 212 02 bekannt. Dabei wird der Schweißdraht an einer Rolle vorbeigeführt und an diese durch eine Gegenrolle angedrückt. Bei Bewegung des Schweißdrahtes in Vorschubrichtung wird die Rolle in Drehbewegung versetzt. Ein mit der Rolle direkt verbundenes Zählwerk zeigt die Länge des Vorschubes direkt an.

Die Firma Linde vertreibt ein Drahtmessgerät unter der Bezeichnung DMG 2, welches ähnlich aufgebaut ist, die Drahtlänge aber mit einer Rolle mit einer Schlitzscheibe misst. Die Schlitzscheibe wird beleuchtet und die wechselnden Hell-Dunkel-Signale aufgefangen und eine Elektronik zur Auswertung zugeleitet. Das Gerät ist in konventioneller Elektronik aufgebaut. Die Auswerteeinheit ist mit der Aufnahmeeinheit über ein Kabel verbunden. Die Auswerteeinheit ist ein Einplatinecomputer, bestückt mit einem Prozessor 8085.

Aus der US 6,051,805 ist ein Schweißgerät bekannt, bei dem ein Lesegerät für den Drahtvorschub mit einem numerischen Display über ein Kabel verbunden ist.

Die drei Geräte haben den Nachteil, dass das Ablesen der vorgeschobenen Drahtlänge nur in direkter Umgebung des Aufnahmegerätes möglich ist.

Auf dem Gebiet des Schweißens sind aber auch drahtlose Übertragungen von Informationen bekannt. So beschreiben die WO02/085566, die EP 1 341 635 und die US 6,639,182 Geräte, bei denen Befehle einem Drahtvorschubgerät über Funk oder Infrarot zugeleitet werden können.

Aufgabe der Erfindung ist es daher, ein Gerät vorzuschlagen, welches den Drahtvorschub anzeigen kann, wobei der Benutzer nicht gezwungen ist, sich in unmittelbarer Nähe des Schweißkopfes aufzuhalten.

Diese Aufgabe wird erfindungsgemäß gelöst von einem Gerät mit den Merkmalen des Anspruchs 1. Ausführungen der Erfindung sind Gegenstände von Unteransprüchen. ErFindungsgemäß ist die Verbindung zwischen dem Messkopf und dem Anzeigegerät drahtlos. Vorteilhaft ist, dass nun der Benutzer sich überall im Raum aufhalten kann, ohne der heißen oder vielleicht mit schädlichen Dämpfen belasteten Umgebung des Schweißkopfes zu nahe zu sein.

Bevorzugt ist das Anzeigegerät ein Handgerät oder ein Taschencomputer (Pocket-PC, Palm, PDA, Handy), welches tragbar ist und die notwendigen Displays für eine Anzeige der Messwerte hat.

Bevorzugt ist im Messkopf ein Messrad angeordnet, das mechanisch, optisch, elektrisch, magnetisch oder inkremental die Bewegung erfasst, diese über einen Drehgeber in ein elektrisches Signal umwandelt und mit einer Sendeeinheit zum Ausgabegerät sendet.

Die Übertragung kann über alle derzeit bekannten Formen der Nahkommunikation - wie Infrarot oder Funk - erfolgen, beispielsweise über Bluetooth, RFCom, OBEX, Service Discovery Protocol oder Logical-Link-Control und Adaption-Protocols. Genauso möglich ist die Verwendung von Connex RF oder Short Range Radio Frequency Formaten.

Die Auswertung kann entweder direkt am Messkopf stattfinden oder im Anzeigegerät. So kann sich im Drahtmesskopf ein kompletter Mikrocomputer mit entsprechendem Speicher- und Auswerteprogramm befinden. Die Daten werden dann dem Handgerät über die Schnittstelle zugeleitet. Hier kann man z.B. im Online-Betrieb die Drahtgeschwindigkeit und die Lichtbogenbrennzeit sehen. Dies sind wichtige Informationen für die Einstellpraxis und für die Überwachung der Qualität. Möglich ist ebenso, dass die Daten aus dem Messkopf über die Schnittstelle (Bluetooth) einem handelsüblichen Pocket-PC oder einem Handgerät zugeführt werden. Ein entsprechendes Auswerteprogramm zeigt dann die Online-Daten der Drahtmessung.

Es erlaubt die komplette Auswertung der Schweißaufgabe sowie eine Kostenermittlung. Ebenso kann hier, wie auch im Handgerät, eine Vorkalkulation erfolgen. Im Gerät können die Kosten für eine Schweißung berechnet werden, wenn die Kosten pro cm bekannt sind.

### Die Erfindung hat folgende Vorteile:

Durch den Einsatz eines Drehgebers wird die Genauigkeit der Messung verbessert. Insbesondere, wenn ein inkrementaler Drehgeber verwendet wird, er auf seiner Messscheibe 360 Teile hat, so dass sich bei einer Umdrehung 360 Impulse ergeben, die beispielsweise einem Drahtvorschub von 5 cm entsprechen, kann eine ausreichende Genauigkeit der Messung gewährleistet werden.

Durch den Einsatz moderner Mikroelektronik und der hohen Speicherdichte ist es möglich, komplette Werkstücke zu erfassen und auszuwerten. Mit den bisherigen Messköpfen konnten nur einzelne Nähte betrachtet werden, eine Addition der Nähte und die Gruppenbildung der Schweißaufgabe war nicht möglich. Die bisher händisch durchgeführte Addition kann elektronisch erfolgen.

Die Verwendung einer drahtlosen Funkverbindung (bevorzugt eine Bluetooth-Schnittstelle) ermöglicht die kabellose Messung auch in schwieriger Arbeitsumgebung.

Der Benutzer kann weit entfernt von der Schweißstelle stehen.

Bereits vorhandene Laptops, Palm-PCs, Pocket-PCs oder Handys können durch einfaches Aufspielen neuer Software verwendet werden, wodurch der apparative Aufwand deutlich verringert ist.

Ein Ausführungsbeispiel der Erfindung wird anhand von vier Figuren näher erläutert.

### Es zeigen:

- Figur 1:: ein zusammengebauter Messkopf,
- Figur 2:: ein teilweise zerlegter Messkopf,
- Figur 3:: ein Handgerät und
- Figur 4:: einen Palm als Anzeigegerät.

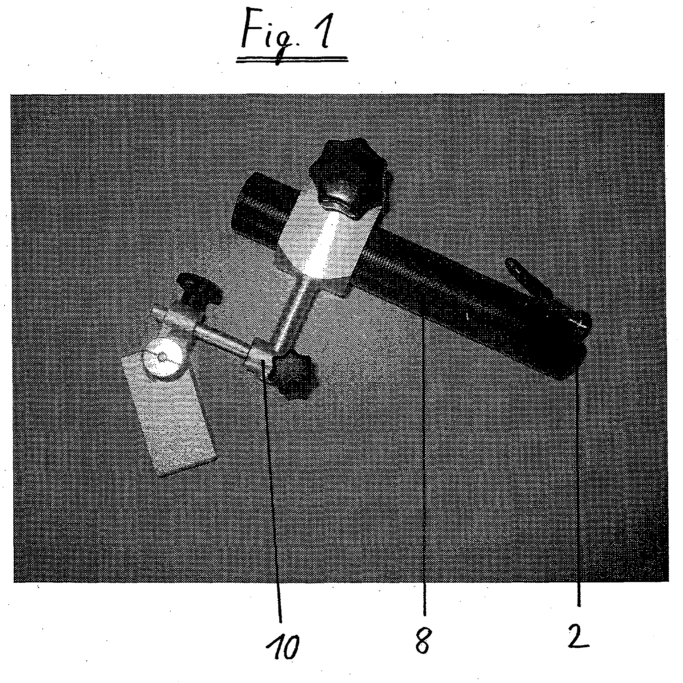

Figur 1 zeigt eine Ausführungsform eines Messkopfes gemäß der Erfindung, wobei der Messkopf 2 sich in dem Gehäuse 8 befindet, welches über einen verstellbaren Träger 10 so ausgerichtet werden kann, dass die Spitze des Messkopfes 2, an der sich das Messrad befindet, an den vorbeilaufenden Draht gelegt werden kann.

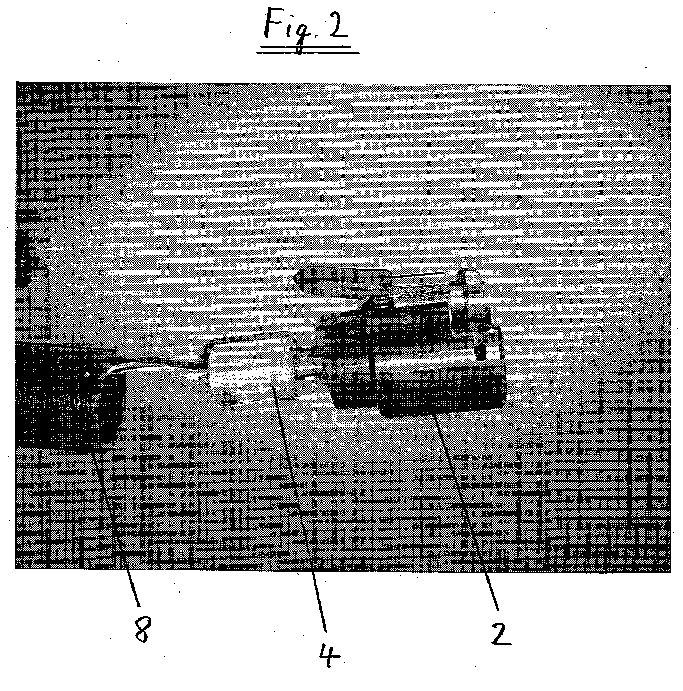

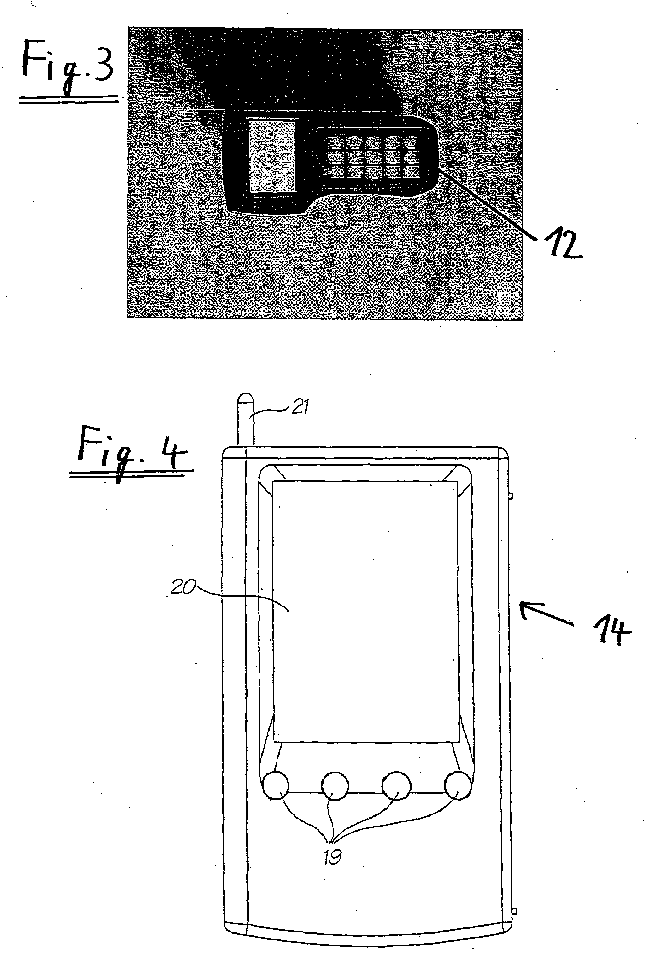

Wie aus Figur 2 besser zu erkennen ist, hat der Messkopf 2 eine Klammer, mit der eine Gegenrolle auf den durchlaufenden Draht gelegt werden kann. Diese federbelastete Gegenrolle drückt den Draht auf ein im Inneren des Messkopfes 2 befindliches Messrad, wodurch ein Schlupf und damit Fehlanzeigen vermieden werden. Die Drehbewegungen des Messrades werden im Messkopf 2 an den Drehgeber 4 weitergeleitet, der die Umdrehungen misst und in elektronische Signale verwandelt. Diese Signale werden an eine Elektronik mit Sender weitergegeben, die im Gehäuse 8 angeordnet ist. Vom Sender gehen die Informationen (oder die schon ausgewerteten Messwerte) drahtlos an das Anzeigegerät 12 oder 14, wie es in den Figuren 3 und 4 gezeigt ist.

Figur 3 zeigt ein Handgerät mit einer Anzeige und mehreren Tasten. Durch Eingabe unterschiedlicher Zahlen oder Buchstaben auf den Tasten können entsprechende Auswerteprogramme oder Anzeigen ein- und ausgeschaltet werden.

Figur 4 zeigt ein alternatives Handgerät, nämlich einen handelsüblichen Taschencomputer 14 mit den Bedienknöpfen 19, der Anzeige 20 und, wenn diese auch interaktiv auf Berührung funktioniert, dem Schreibstift 21.

## Patentansprüche

1. Messvorrichtung für den Drahtvorschub beim MIG- oder MAG-Schweißen mit einem Messkopf (2), der die Länge des vorgeschobenen Drahtes erfasst, und einem Anzeigegerät, **gekennzeichnet durch** eine drahtlose Verbindung zwischen Messkopf (2) und Anzeigegerät.

2. Messvorrichtung nach Anspruch 1, **dadurch gekennzeichnet, dass** das Anzeigegerät ein Handgerät (12) oder ein Taschencomputer (14) ist.

3. Messvorrichtung nach Anspruch 1 oder Anspruch 2, **dadurch gekennzeichnet, dass** der Messkopf (2) ein Messrad oder einen Drehgeber (4) enthält.

4. Messvorrichtung nach einem der vorhergehenden Ansprüche, **dadurch gekennzeichnet, dass** die Übertragung mittels Bluetooth, Connex RF oder Short Range Radio Frequency Format erfolgt.

5. Messvorrichtung nach einem der vorhergehenden Ansprüche, **dadurch gekennzeichnet, dass** der Messkopf (2), der Drehgeber (4) und die Sendeelektronik in einem Gehäuse (8) integriert sind.

6. Messvorrichtung nach einem der vorhergehenden Ansprüche, **gekennzeichnet durch** einen verstellbaren Träger (10).
